(19) Europäisches Patentamt
European Patent Office
Office européen des brevets

(11) Veröffentlichungsnummer : **0 178 398**
**B1**

(12) # EUROPÄISCHE PATENTSCHRIFT

(45) Veröffentlichungstag der Patentschrift : **07.09.88**

(51) Int. Cl.⁴ : **C 08 G 18/80**, C 08 G 18/75, C 09 D 3/72, C 09 D 5/03

(21) Anmeldenummer : **85109265.0**

(22) Anmeldetag : **24.07.85**

(54) **Lagerstabile Polyurethanharz-Pulverlacke.**

(30) Priorität : **22.09.84 DE 3434881**

(43) Veröffentlichungstag der Anmeldung : **23.04.86 Patentblatt 86/17**

(45) Bekanntmachung des Hinweises auf die Patenterteilung : **07.09.88 Patentblatt 88/36**

(84) Benannte Vertragsstaaten : **DE FR GB IT NL**

(56) Entgegenhaltungen :
**EP-A- 0 000 971**
**EP-A- 0 004 571**
**EP-A- 0 096 210**
**EP-A- 0 125 438**
**DE-A- 2 937 397**

(73) Patentinhaber : **HÜLS AKTIENGESELLSCHAFT**
**- RSP Patente / PB 15 - Postfach 13 20**
**D-4370 Marl 1 (DE)**

(72) Erfinder : **Gras, Rainer, Dr.**
**Im Ostholz 49 a**
**D-4630 Bochum 5 (DE)**
Erfinder : **Riemer, Heinz, Dr.**
**Fritz-Reuter-Strasse 15**
**D-4250 Bottrop 2 (DE)**
Erfinder : **Wolf, Elmar, Dr.**
**Stauffenbergstrasse 7**
**D-4350 Recklinghausen (DE)**

**EP 0 178 398 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Um 1970 setzte eine stürmische Entwicklung einer neuen « Pulver-Generation » ein. Es handelt sich hierbei um PUR-Pulver auf Basis von ε-Caprolactam blockierten Isophorondiisocyanat-Polyoladdukten und Polyesterpolyolen wie sie z. B. in DE-OS 19 57 483 und DE-PS 21 27 839 beschrieben werden. ε-Caprolactam blockiertes Isophorondiisocyanat (IPDI) schmilzt bei 53-55 °C. Infolge der niedrigen Schmelztemperatur backen die aus diesem blockierten IPDI hergestellten Pulver beim Lagern zusammen. Zur Erhöhung des Schmelzpunktes wird IPDI vor der ε-Caprolactam-Blokkierung einer Kettenverlängerung mit einem Polyol (NCO : OH = 2 : 1) unterworfen. In der DE-PS 21 05 777 werden als Kettenverlängerungsmittel für IPDI Polyole wie Trimethylolpropan, 2.2.4-Trimethylhexandiol-1,6 und Diäthylenglykol genannt, in der DE-OS 25 42 191 sind es Gemische aus diund trifunktionellen Polyolen.

Die mit diesen ε-Caprolactam verkappten IPDI-Polyisocyanat-Addukten in der Hitze hergestellten Lacküberzüge zeichnen sich durch guten Verlauf, gute Chemikalienbeständigkeit und gute lacktechnische Eigenschaften aus. Ein entscheidender Nachteil dieser Polyurethan-Pulverlacke ist ihre hohe Härtungstemperatur, sie beträgt ca. 200 °C.

Es hat nicht an Versuchen gefehlt, diese hohen Härtungstemperaturen von PUR-Pulverlacken zu senken. In der DE-OS 30 04 876 werden blockierte IPDI-Addukte mit gegenüber den in der DE-PS 21 05 777 beschriebenen PUR-Pulverhärtern erhöhter Reaktivität dadurch erhalten, daß man IPDI mit einem Polyol so umsetzt, daß pro OH-Äquivalent mindestens 3,3, maximal 8 NCO-Äquivalente des IPDI zur Reaktion kommen und man anschließend die freien NCO-Gruppen blockiert.

In den DE-OSS 27 35 497 und 28 42 641 werden reaktivere PUR-Pulver beschrieben, die dadurch gekennzeichnet sind, daß sie als Härter ein ε-Caprolactam-blockiertes isocyanuratgruppenhaltiges IPDI-Addukt enthalten.

Die Härtungstemperatur der in diesen Schutzrechten beschriebenen PUR-Pulvern lag bei mindestens 170 °C.

Eine weitere Senkung der Härtungstemperatur von PUR-Pulvern konnte dadurch erzielt werden, daß man als Härter IPDI bzw. IPDI-Polyol-Addukte (NCO : OH = 2 : 1) mit cyclischen Amidinen blockierten NCO-Gruppen einsetzte (DE-OS 27 44 721). Die gehärteten Pulverlackfilme zeigten allerdings eine deutliche Gelbfärbung auf.

Es besteht großes Interesse an PUR-Pulverhärtern, mit denen man witterungsbeständige, nicht verfärbte Pulverüberzüge bereits bei Temperaturen unterhalb 170 °C herstellen kann.

Gemäß DE-OS 32 21 558 ist es bekannt, sekundäre Amine als Blockierungsmittel für Isocyanate, und zwar für den lösungsmittelhaltigen Lacksektor, einzusetzen. Die Anwendung von Aminen für diesen Zweck ist problematisch, da in jedem Fall etwas Amin im Lack verbleibt und zu Verfärbungen führt, siehe DE-OS 32 21 558, Seite 8, Zeile 34 und DE-OS 30 39 824, Seite 6, Zeile 19.

Es war schon überraschend, daß Amine als Blockierungsmittel für den lösungsmittelhaltigen Lacksektor geeignet sind, aber dies ist wohl dahingehend erklärbar, daß diese nahezu quantitativ mit dem Lösungsmittel entfernbar sind.

Überraschenderweise wurde nunmehr gefunden, daß es mit wenigen Ausnahmen möglich ist, sekundäre Amine auch in Pulverlacken einzusetzen, ohne daß es beim Einbrennen, Überbrennen oder Bewittern zu Verfärbungen kommt. Dies ist für den Fachmann nicht vorhersehbar gewesen, da bekanntermaßen größere Mengen an Blockierungsmittel im ausgehärteten Pulverlack verbleiben und eigentlich zu unbrauchbaren Produkten in bezug auf Verfärbung durch Amin Beim Einbrennen führen müßten. Zu den nicht geeigneten Aminen zählt z. B. Diisopropylamin, welches im Pulverlacksektor wegen seiner hohen Reaktivität zu ausgeprägter Schaumbildung führt. Durch den Einsatz dieser sekundären Amine kommt man auf einfache Weise zu PUR-Pulverhärtern auf IPDI-Basis ohne Kettenverlängerungsschritt, welche die vorteilhaften Eigenschaften der eingangs beschriebenen Härter haben, aber zusätzlich reaktiver als diese sind.

Gegenstand der Erfindung sind lagerstabile Polyurethanharz-Pulverlacke, die unterhalb 170 °C härten, aus Polyolen mit einem Schmelzpunkt von mindestens 70 °C und blockiertem Isophorondiisocyanat (IPDI), dadurch gekennzeichnet, daß man IPDI mit sekundären Aminen mit einem Siedepunkt von mindestens 150 °C und der allgemeinen Formel :

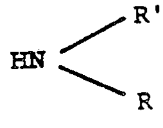

umsetzt, worin R und R′ gleiche oder verschiedene Substituenten aus der Gruppe Alkyl — Alkyl stets in α-Stellung zum N substituiert — ggf. substituiertes Cycloalkyl, Aralkyl, sein können, R und R′ zusammen mindestens 9 C-Atome enthalten.

IPDI und die sekundären, sterisch gehinderten Amine werden dabei in solchen Mengen eingesetzt, daß auf eine Isocyanatgruppe 0,5-1, vorzugsweise 0,8-1 Mol sekundäres Amin kommen.

Aus den genannten Gründen ist es nicht erstaunlich, daß bei der Vielzahl der Blockierungsmittel mit aktiven N-, O-, C-Wasserstoffen primäre oder sekundäre Amine als Blockierungsmittel für Polyisocyanate in Pulverlacken in der Literatur nicht beschrieben sind. Es gibt zwar eine Reihe von Schutzrechten, in denen Harnstoffe aus Mono- wie Diisocyanaten mit primären oder sekundären Aminen als Härter für Epoxidharze beschrieben werden, wie z. B. in den US-A- 3 227 679, 3 317 612, 3 321 549, 3 789 071, 3 407 175, 3 956 237. Die Härtung erfolgt hierbei aber im wesentlichen durch Reaktion der Harnstoffgruppe mit der Epoxidgruppe unter Oxazolidinonbildung. Über Harnstoffe aus Polyisocyanaten und sekundären Aminen als Pulverhärter für Polyole finden sich dagegen keine Hinweise in der Literatur. Es muß allerdings darauf hingewiesen werden, daß zur Herstellung der erfindungsgemäßen Verbindungen nur solche sekundären, sterisch gehinderten Amine geeignet sind, die einen Siedepunkt von mindestens ca. 160 °C haben. Die Deblockierung eines mit Diisopropylamin blockierten IPDI erfolgt z. B. bei tieferen Temperaturen als die des ε-Caprolactam blockierten IPDI. Trotzdem ist dieses Produkt als PUR-Pulverhärter nicht geeignet, da das bei der Härtung freigesetzte, leichtflüchtige Amin zur Schaumbildung im Lackfilm führt.

Je sterisch gehinderter das sekundäre Amin — genauer gesagt, die sterische Abschirmung des am N gebundenen H-Atoms ist — desto niedriger ist die Aufspalttemperatur des damit blockierten Polyisocyanates.

In der Regel wird zur Herstellung der erfindungsgemäßen PUR-Pulverhärter IPDI ohne vorherige Molekülvergrößerung mit den sekundären, sterisch gehinderten Aminen in Substanz oder auch in Lösung umgesetzt. In Spezialfällen kann es allerdings durchaus vorteilhaft sein, das IPDI vor der Blockierung einer Umsetzung zur Molekülvergrößerung mit den in der Isocyanatchemie gebräuchlichen sogenannten Kettenverlängerungsmitteln zu unterwerfen, wie dies für die Kettenverlängerung mit Polyolen in den DE-A- 19 57 483, 25 42 191, 30 04 876 und DE-C 21 05 777 sowie für die Molekülvergrößerung des IPDI durch teilweise Trimerisierung gemäß den DE-A 27 35 497 und 28 42 641, beschrieben wird.

Geeignete sekundäre Amine im Sinne der vorliegenden Erfindung, die der früher beschriebenen allgemeinen Formel entsprechen, sind beispielsweise t-Butyl-1-methylpentylamin, t-Butyl-benzylamin, Di-(1-methylpentyl)amin, Di-(1-ethylbutyl)amin, Dicyclohexylamin, t-Butyl-cyclohexylamin, Di-(3.5.5-trimethyl)-cyclohexylamin und Dicyclopentylamin. Es können auch Gemische der sekundären Amine erfindungsgemäß eingesetzt werden.

Die Umsetzung von IPDI mit den sekundären Aminen kann sowohl in Lösungsmitteln als auch in Schmelze durchgeführt werden. Wird in Substanz gearbeitet, so wird zu dem auf 70-120 °C erhitzten IPDI das sekundäre Amin so zudosiert, daß die Temperatur des Reaktionsgemisches nicht über 130 °C steigt. Nach Beendigung der Blockierungsmittelzugabe wird das Reaktionsgemisch zur Vervollständigung der Reaktion noch ca. eine Stunde bei ca. 100-120 °C weiter erhitzt.

Die Blockierung kann, wie bereits erwähnt, auch in Lösungsmitteln durchgeführt werden. Als Lösungsmittel für diese Reaktion kommen natürlich nur solche infrage, die mit IPDI nicht reagieren, beispielsweise Ketone wie Aceton, Methylethylketon, Methyl-isobutylketon, Cyclopentanon, Cyclohexanon u. a., Aromaten wie Toluol, Nitrobenzol u. a., cyclische Ether wie Tetrahydrofuran, Dioxan sowie aprotische Lösungsmittel wie Dimethylformamid, Dimethylacetamid, Dimethylsulfoxid usw.

Bei den so erhältlichen erfindungsgemäßen Verbindungen handelt es sich im allgemeinen um Verbindungen des Molgewichtsbereichs von 300-900, vorzugsweise 350-700. Die Verfahrensprodukte besitzen einen Schmelzbereich von 70-180 °C, vorzugsweise 80-140 °C. Das mit den sekundären Aminen blockierte IPDI ist weiter durch einen Gehalt an entständig in blockierter Form vorliegenden Isocyanatgruppen (berechnet als NCO) von 8-20 Gew.%, vorzugsweise 10-16 Gew.%, charakterisiert.

Die Verfahrensprodukte eignen sich insbesondere als Härter für Zerewitinoff-aktive Wasserstoffatome aufweisende, höherfunktionelle Verbindungen. In Kombination mit derartigen Zerewitinoff-aktive Wasserstoffatome aufweisende Verbindungen bilden die Verfahrensprodukte oberhalb 110 °C, vorzugsweise 130-170 °C, zu hochwertigen Kunststoffen aushärtbare Systeme. Das bedeutendste Anwendungsgebiet für die erfindungsgemäßen Verbindungen ist ihre Verwendung als Bindemittel für lichtbeständige Polyurethan-Pulverlacke.

Die hitzehärtbare, pulverförmige Masse, in der das erfindungsgemäß maskierte Polyisocyanat eingesetzt wird, enthält :

a) 100 Gew.T. hydroxylgruppenhaltiges Polymer
b) 10-90 Gew.T. blockiertes IPDI
c) 0-120 Gew.T. Pigmente
d) 0-200 Gew.T. übliche Füllstoffe
e) 0-5 Gew.T. Katalysator
f) 0-5 Gew.T. Verlaufmittel

Der Bestandteil a) kann im Prinzip jedes mehr als 2 OH-Gruppen enthaltendes Polymer sein, das mindestens bei 70 °C schmilzt. Hierbei handelt es sich um Polyetherpolyole, Polyester-Amid-Polyole, Polyurethan-Polyole, hydroxylierte Acrylharze usw., deren OH-Gruppen für die Vernetzung mit dem erfindungsgemäßen, maskierten IPDI bestimmt sind. Besonders bevorzugt sind unter den zahlreichen Möglichkeiten für Hydroxylgruppen tragende Polymere im Rahmen der Erfindung Polyester-Polyole.

Solche Polyester-Polyole müssen im Molekulargewicht zwischen 1 000 und 10 000, vorzugsweise 1 500-5 000 und eine OH-Zahl von 20-240, vorzugsweise 30-100, besitzen. Solche Polyester-Polyole werden z. B. in den DE-OSS 19 57 483, 25 42 191, 30 04 876, 31 43 060, beschrieben.

Um die Geliergeschwindigkeit der hitzehärtbaren Massen zu erhöhen, kann man Katalysatoren zusetzen. Als Katalysatoren verwendet man Organozinnverbindungen wie Dibutylzinndilaurat, Sn(II)-octoat, Dibutylzinnmaleat usw.

Die Menge an zugesetztem Katalysator beträgt 0,1-5 Gew.% auf 100 Gew.T. des Hydroxylgruppen tragenden Polymeren. Die erfindungsgemäß hergestellten Überzüge zeichnen sich durch hervorragende Witterungsbeständigkeit und sehr gute Farbbeständigkeit aus.

A Herstellung der blockierten Polyisocyanate

Beispiel 1

Zur 444 Gew.T. Isophorondiisocyanat (IPDI) wurden bei 120 °C 724 Gew.T. Dicyclohexylamin so zugetropft, daß die Temperatur des Reaktionsgemisches nicht über 130 °C stieg. Nach erfolgter Dicyclohexylaminzugabe wurde zur Vervollständigung der Reaktion noch ca. 1 Stunde bei 130 °C weiter erhitzt.

Das so hergestellte Reaktionsprodukt hatte einen Schmelzpunkt von 105-110 °C und einen Gehalt an blockiertem NCO von 14,3 %.

Beispiel 2

Zu 222 Gew.T. IPDI wurden bei 130 °C 530 Gew.T. Di-(3.5.5-trimethyl)-cyclohexylamin innerhalb von ca. 2 Stunden zugetropft. Nach Beendigung der Aminzugabe wurde das Reaktionsgemisch noch 2 Stunden bei 130 °C weiter erhitzt. Das Reaktionsgemisch hatte einen Schmelzpunkt von 84-91 °C und einen Gehalt an blockiertem NCO von 11,1 %.

Beispiel 3 (Vergleich)

In analoger Weise zu dem in den Beispielen 1 und 2 beschriebenen Verfahren wurden 222 Gew.T. IPDI mit 226 Gew.T. 2.6-Dimethylpiperidin umgesetzt.

Das Reaktionsprodukt hatte einen Schmelzpunkt von 99-103 °C und einen Gehalt an blockiertem NCO von 18,7 %.

Beispiel 4 (Vergleich)

Zu 111 Gew.T. IPDI, die in 500 Gew.T. wasserfreiem Aceton gelöst waren, wurden bei Raumtemperatur 10 Gew.T. Diisopropylamin innerhalb von ca. 2 Stunden zugetropft. Nach der Diisopropylaminzugabe wurde noch 2 Stunden bei 50 °C weitererhitzt. Danach wurde das Aceton abdestilliert ; die letzten Reste Aceton wurden im Vakuumtrockenschrank bei 60 °C und 1 Torr entfernt. Das Reaktionsprodukt hatte einen Schmelzpunkt von 65-74 °C und einen Gehalt an blockiertem NCO von 19,8 %.

Beispiel 5 (Vergleich)

In Analogie zu dem im Beispiel 4 beschriebenen Verfahren wurden 111 Gew.T. IPDI und 129 Gew.T. Di-isobutylamin umgesetzt.

Das Reaktionsprodukt hatte einen Schmelzpunkt von 73-77 °C und einen Gehalt an blockiertem NCO von 17,5 %.

Beispiel 6 (Vergleich)

Zu 444 Gew.T. IPDI wurden bei 110 °C 400 Gew.T. N-Methylpiperazin so zugetropft, daß die Temperatur des Reaktionsgemisches nicht über 135 °C stieg. Nach erfolgter Aminzugabe wurde zur Vervollständigung der Reaktion noch 1 Stunde bei 130 °C weiter erhitzt. Das so hergestellte Reaktionsprodukt hatte einen Schmelzpunkt von 73-77 °C und einen Gehalt an blockiertem NCO von 18,7 %.

Freies Amin war in den Beispielen 1-6 nicht mehr nachweisbar.

B Polyolkomponente

Allgemeine Herstellungsvorschrift

Die Ausgabgskomponenten — Terephthalsäure (Ts), Dimethylterephthalat (DMT), Hexandiol-1,6 (HD), Neopentylglykol (NPG), 1,4-Dimethylolcyclohexan (DMC) und Trimethylolpropan (TMP) — werden in einen Reaktor gegeben und mit Hilfe eines Ölbades erwärmt. Nachdem die Stoffe zum größten Teil

aufgeschmolzen sind, werden bei einer Temperatur von 160 °C 0,05 Gew.% Di-n-butylzinnoxid als Katalysator zugesetzt. Die erste Methanolabspaltung tritt bei einer Temperatur von ca. 170 °C auf. Innerhalb 6 bis 8 Stunden wird die Temperatur auf 220 bis 230 °C erhöht und innerhalb weiterer 12 bis 15 Stunden die Reaktion zu Ende geführt. Der Polyester wird auf 200 °C abgekühlt und durch Anlegen von Vakuum (1 mm Hg) innerhalb 30 bis 45 min weitgehend von flüchtigen Anteilen befreit. Während der gesamten Reaktionszeit wird das Sumpfprodukt gerührt und ein schwacher $N_2$-Strom durch das Reaktionsgemisch geleitet.

Folgende Tabelle gibt Polyesterzusammensetzungen und die entsprechenden physikalischen und chemischen Kenndaten wieder.

(Siehe Tabelle Seite 6 f.)

Polyester

| | Ausgangskomponenten | | | | | | Chemische und physikalische Kenndaten | | | | |
|---|---|---|---|---|---|---|---|---|---|---|---|
| Beisp. | Ts Mol | DMT Mol | HD Mol | NPG Mol | DMC Mol | TMP Mol | OH-Zahl mg KOH/g | Säurezahl mg KOH/g | Schmelzp. °C | DTA °C | Visk. b. 160 °C mPa · s |
| 1 | 10 | 10 | 6,25 | 10,5 | 2 | 2,9 | 55 - 60 | 3 - 4 | ca. 75 | ca. 50 | ~ 25 000 |
| 2 | Crylcoat® 280 M; ein Polyester der Firma UCB | | | | | | ~ 50 | < 10 | 100 ± 8 | 55 ± 8 | - |

C Polyurethan-Pulverlacke

Allgemeine Herstellungsvorschrift

Die gemahlenen Produkte, Vernetzer, Polyester, Verlaufmittel, Masterbatch, werden gegebenenfalls mit dem Weißpigment und gegebenenfalls Füllstoffen, in einem Kollergang innig vermischt und anschließend im Extruder bei 80 bis 110 °C homogenisiert. Nach dem Erkalten wird das Extrudat gebrochen und mit einer Stiftmühle auf eine Korngröße < 100 µm gemahlen. Das so hergestellte Pulver wird mit einer elektrostatischen Pulverspritzanlage bei 60 KV auf entfettete, gegebenenfalls vorbehandelte Eisenbleche appliziert und in einem Umlufttrockenschrank eingebrannt.

Verlaufmittel Masterbatch

Es werden 10 Gew.% des Verlaufmittels — ein handelsübliches Copolymeres von Butylacrylat und 2-Ethylhexylacrylat — in dem entsprechenden Polyester in der Schmelze homogenisiert und nach dem Erstarren zerkleinert.

Die Abkürzungen in den folgenden Tabelle bedeuten :

SD = Schichtdicke in µm
HK = Härte nach König in sec (DIN 53 157)
HB = Härte nach Buchholz (Din 53 153)
ET = Tiefung nach Erichsen in mm (DIN 53 156)
GS = Gitterschnittprüfung (DIN 53 151)
GG 60° ∢ = Messung des Glanzes nach Gardner (ASTM-D 523)
Imp. rev. = Impact reverse in g.m

Beispiel 1

Pigmentierter Lack

Nach dem beschriebenen Verfahren wurde der Pulverlack mit folgender Rezeptur hergestellt, appliziert und zwischen 160 und 200 °C eingebrannt.

489,4 Gew.T. Polyester gemäß Beispiel B 1
170,6 Gew.T. Vernetzer gemäß Beispiel A 1
480,0 Gew.T. Weißpigment ($TiO_2$)
60,0 Gew.T. Verlaufmittel-Masterbatch

| Einbrennbedingungen | Mechanische Kenndaten | | | | | | |
|---|---|---|---|---|---|---|---|
| Zeit/Temperatur | SD | HK | HB | ET | GS | Imp. rev. | GG 60 ° ∢ |
| 6 '/ 200 °C | 70-85 | 181 | 100 | 5,4- 6,8 | 0 | 576 | 82 |
| 8 '/ 200 °C | 60-80 | 177 | 100 | 8,8-10,0 | 0 | 691,2 | 85 |
| 10 '/ 200 °C | 70-80 | 175 | 100 | 9,5-10,0 | 0 | 944,6 | 82 |
| 10 '/ 180 °C | 60-70 | 177 | 100 | 7,2- 8,8 | 0 | 691,2 | 79 |
| 12 '/ 180 °C | 70 | 180 | 100 | 9,0-10,0 | 0 | 944,6 | 78 |
| 15 '/ 180 °C | 60-75 | 179 | 100 | > 10,0 | 0 | 944,6 | 82 |
| 15 '/ 170 °C | 70 | 179 | 111 | 8,2 | 0 | 460,8 | 78 |
| 20 '/ 170 °C | 70 | 183 | 111 | 9,2-10,0 | 0 | 806,4 | 80 |
| 20 '/ 160 °C | 70-90 | 186 | 111 | 6,1- 8,9 | 0 | 806,4 | 78 |
| 25 '/ 160 °C | 70-85 | 184 | 100 | 9,2-10,0 | 0 | 806,4 | 79 |

Beispiel 2

Pigmentierter Lack

Nach dem beschriebenen Verfahren wurde der Pulverlack mit folgender Rezeptur hergestellt, appliziert und zwischen 160 und 200 °C eingebrannt.

453,8 Gew.T. Polyester gemäß Beispiel B 1
206,2 Gew.T. Vernetzer gemäß Beispiel A 2
480,0 Gew.T. Weißpigment ($TiO_2$)
60,0 Gew.T. Verlaufmittel-Masterbatch

| Einbrennbedingungen | Mechanische Kenndaten | | | | | | |
|---|---|---|---|---|---|---|---|
| Zeit/Temperatur | SD | HK | HB | ET | GS | Imp. rev. | GG 60° ∢ |
| 6 '/ 200 °C | 60-70 | 183 | 100 | 9,5- 9,7 | 0 | 806,4 | 79 |
| 8 '/ 200 °C | 50-70 | 178 | 111 | 9,8-10,0 | 0 | >944,6 | 81 |
| 10 '/ 200 °C | 60-70 | 176 | 125 | 9,4- 9,9 | 0 | >944,6 | 83 |
| 10 '/ 180 °C | 50-60 | 186 | 125 | 9,0- 9,3 | 0 | 806,4 | 79 |
| 12 '/ 180 °C | 60-70 | 181 | 100 | 9,4-10,0 | 0 | 806,4 | 78 |
| 15 '/ 180 °C | 55-65 | 178 | 100 | > 10,0 | 0 | 944,6 | 80 |
| 20 '/ 170 °C | 60-70 | 182 | 111 | 9,7-10,0 | 0 | 410,8 | 78 |
| 25 '/ 170 °C | 60-70 | 187 | 111 | 9,4-10,0 | 0 | 806,4 | 82 |
| 25 '/ 160 °C | 60-70 | 187 | 111 | 9,5-10,0 | 0 | 806,4 | 81 |
| 30 '/ 160 °C | 50-60 | 182 | 100 | 9,3-10,0 | 0 | 944,6 | 80 |

Beispiel 3

Pigmentierter Lack

Nach dem beschriebenen Verfahren wurde der Pulverlack mit folgender Rezeptur hergestellt, appliziert und zwischen 160 und 200 °C eingebrannt.

420,2 Gew.T. Polyester gemäß Beispiel B 2
129,8 Gew.T. Vernetzer gemäß Beispiel A 1
400,0 Gew.T. Weißpigment ($TiO_2$)
50,0 Gew.T. Verlaufmittel-Masterbatch

| Einbrennbedingungen | Mechanische Kenndaten | | | | | | |
|---|---|---|---|---|---|---|---|
| Zeit/Temperatur | SD | HK | HB | ET | GS | Imp. rev. | GG 60° ∢ |
| 8 '/ 200 °C | 50-60 | 170 | 100 | 6,4-6,6 | 0 | 691,2 | 72 |
| 10 '/ 200 °C | 60-70 | 165 | 100 | 8,3 | 0 | 691,2 | 74 |
| 12 '/ 200 °C | 60-70 | 172 | 100 | 9,0-9,3 | 0 | 806,4 | 74 |
| 12 '/ 180 °C | 60-70 | 170 | 100 | 4,9-5,1 | 0 | 115,2 | 76 |
| 15 '/ 180 °C | 55-75 | 172 | 111 | 6,7-8,5 | 0 | 345,6 | 74 |
| 20 '/ 180 °C | 60-80 | 167 | 100 | 8,4-9,0 | 0 | 691,2 | 75 |
| 15 '/ 170 °C | 50-60 | 170 | 100 | 7,1-8,6 | 0 | 806,4 | 77 |
| 20 '/ 170 °C | 60 | 174 | 111 | 7,9-8,8 | 0 | 691,2 | 77 |
| 20 '/ 160 °C | 50-60 | 169 | 100 | 8,1-8,8 | 0 | 576 | 72 |
| 25 '/ 160 °C | 55-70 | 175 | 100 | 7,9-9,0 | 0 | 691,2 | 74 |

Beispiel 4

Pigmentierter Lack

Nach dem beschriebenen Verfahren wurde der Pulverlack mit folgender Rezeptur hergestellt, appliziert und zwischen 160 und 200 °C eingebrannt.

392,2 Gew.T. Polyester gemäß Beispiel B 2
157,8 Gew.T. Vernetzer gemäß Beispiel A 2
400,0 Gew.T. Weißpigment ($TiO_2$)
50,0 Gew.T. Verlaufmittel-Masterbatch

| Einbrennbedingungen | Mechanische Kenndaten | | | | | | |
|---|---|---|---|---|---|---|---|
| Zeit/Temperatur | SD | HK | HB | ET | GS | Imp. rev. | GG 60° ∢ |
| 8 '/ 200 °C | 50-60 | 175 | 100 | 7,5- 8,0 | 0 | 460,8 | 81 |
| 10 '/ 200 °C | 60-70 | 173 | 111 | 9,0- 9,3 | 0 | 691,2 | 81 |
| 12 '/ 200 °C | 50-70 | 175 | 100 | 9,5-10,0 | 0 | 944,6 | 84 |
| 12 '/ 180 °C | 60-70 | 180 | 100 | 7,4- 8,0 | 0 | 345,6 | 86 |
| 15 '/ 180 °C | 70 | 177 | 111 | 8,5- 9,0 | 0 | 576 | 82 |
| 20 '/ 180 °C | 60-70 | 178 | 111 | 9,0-10,0 | 0 | 806,4 | 84 |
| 20 '/ 170 °C | 50 | 182 | 100 | 6,1-7,0 | 0 | 345,6 | 84 |
| 25 '/ 170 °C | 45-60 | 180 | 110 | 6,8-7,7 | 0 | 576 | 84 |
| 25 '/ 160 °C | 50 | 171 | 111 | 5,1-5,9 | 0 | 230,4 | 82 |
| 30 '/ 160 °C | 50-60 | 181 | 100 | 6,3-6,8 | 0 | 460,8 | 86 |

## Beispiel 5 (Vergleich)

Pigmentierter Lack

Nach dem beschriebenen Verfahren wurde der Pulverlack mit folgender Rezeptur hergestellt, appliziert und zwischen 160 °C und 200 °C eingebrannt.

525,1 Gew.T. Polyester gemäß Beispiel B 1
134,9 Gew.T. Vernetzer gemäß Beispiel A 4
480,0 Gew.T. Weißpigment ($TiO_2$)
60,0 Gew.T. Verlaufmittel-Masterbatch

Bei Schichtstärken der Probefilme $> 40$ µm war keine einwandfreie Lackoberfläche zu erzielen. Es trat starke Schaumbildung auf.

## Beispiel 6 (Vergleich)

Pigmentierter Lack

Nach dem beschriebenen Verfahren wurde der Pulverlack mit folgender Rezeptur hergestellt, appliziert und zwischen 160 °C und 200 °C eingebrannt.

519,0 Gew.T. Polyester gemäß Beispiel B 2
141,0 Gew.T. Vernetzer gemäß Beispiel A 5
480,0 Gew.T. Weißpigment ($TiO_2$)
60,0 Gew.T. Verlaufmittel-Masterbatch

Aufgrund starker Schaumbildung der Lackfilme bei Schichtstärken $> 40$ µm konnten keine lacktechnischen Kenndaten ermittelt werden.

**Patentanspruch**

Lagerstabile Polyurethanharz-Pulverlacke, die unterhalb 170 °C härten, aus Polyolen mit einem Schmelzpunkt von mindestens 70 °C und blockiertem Isophorondiisocyanat (IPDI), dadurch gekennzeichnet, daß man IPDI mit sekundären Aminen mit einem Siedepunkt von mindestens 150 °C und der allgemeinen Formel :

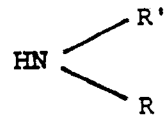

umsetzt, worin R und R′ gleiche oder verschiedene Substituenten aus der Gruppe Alkyl — Alkyl stets in α-Stellung zum N substituiert — ggf. substituiertes Cycloalkyl, Aralkyl, sein können und R und R′ zusammen mindestens 9 C-Atome enthalten.

**Claim**

Storage-stable polyurethane resin powder coatings, which harden below 170 °C, made from polyols with a melting point of at least 70 °C and blocked isophoronediisocyanate (IDPI), characterized in that IDPI is reacted with secondary amines with a melting point of at least 150 °C and having the general formula :

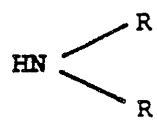

wherein R and R′, which may be the same or different substituents, are chosen from the group alkyl — substituted alkyl, the substituent relative to the N-atom being in the α-position — optionally substituted cycloalkyl, aralkyl, and R and R′ together contain at least 9 C atoms.

**Revendication**

Laques en poudres à base de résine de polyuréthane, stables au stockage, à base de polyols ayant un point de fusion d'au moins 70 °C et de dididocyanate d'isophorone (IPDI), caractérisées en ce que IPDI est condensé avec des amines secondaires ayant un point d'ébullition d'au moins 150 °C et répondant à la formule générale :

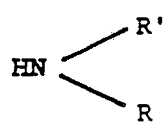

dans laquelle R et R′ sont des substituants identiques ou différents choisis dans le groupe des alcoyles, des alcoyles substitués toujours en position α de l'azote, cycloalcoyle éventuellement substitué, aralcoyle et R et R′ ensemble contiennent au moins 9 atomes de Carbone.